(19) Europäisches Patentamt
European Patent Office
Office européen des brevets

(11) EP 2 612 166 B1

(12) FASCICULE DE BREVET EUROPEEN

(45) Date de publication et mention
de la délivrance du brevet:
19.11.2014 Bulletin 2014/47

(51) Int Cl.:
G01S 13/00 (2006.01)

(21) Numéro de dépôt: 11764824.6

(22) Date de dépôt: 31.08.2011

(86) Numéro de dépôt international:
PCT/FR2011/051999

(87) Numéro de publication internationale:
WO 2012/089942 (05.07.2012 Gazette 2012/27)

(54) PROCÉDÉ ET DISPOSITIF DE LOCALISATION D'AU MOINS UN OBSTACLE DANS UN RÉSEAU DE COMMUNICATION, PROGRAMME D'ORDINATEUR CORRESPONDANT

VERFAHREN UND VORRICHTUNG ZUR ORTUNG VON MINDESTENS EINEM HINDERNIS IN EINEM KOMMUNIKATIONSNETZ SOWIE ZUGEHÖRIGES COMPUTERPROGRAMM

METHOD AND DEVICE FOR LOCATING AT LEAST ONE OBSTACLE IN A COMMUNICATION NETWORK, CORRESPONDING COMPUTER PROGRAM

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR

(30) Priorité: 01.09.2010 FR 1056931

(43) Date de publication de la demande:
10.07.2013 Bulletin 2013/28

(73) Titulaire: Orange
75015 Paris (FR)

(72) Inventeurs:
• SIAUD, Isabelle
F-35000 Rennes (FR)
• ULMER-MOLL, Anne-Marie
F-35700 Rennes (FR)

(74) Mandataire: Jeune, Pascale
Orange
FT/OLNC/OLPS/IPL/PAT
38-40, rue du Général Leclerc
92794 Issy-Les-Moulineaux Cedex 9 (FR)

(56) Documents cités:
• NICHOLAS J WILLIS ED - NICHOLAS J WILLIS:
"Bistatic Radar, Passages", INTERNET
CITATION, 2005, pages 2,6-7,59, XP002632877,
Extrait de l'Internet: URL:http://proxy.bookfi.org/
genesis1/16500
0/ad9e601e1a929e15be813b085c801 ced/_as/
%5BNicholas%20J.%20Willis%5D_Bista
tic%20radar(BookFi.org).pdf [extrait le
2011-04-13]
• MARTIN TOBIAS ET AL: "Multitarget Tracking
Using Multiple Bistatic Range Measurements
with Probability Hypothesis Densities",
PROCEEDINGS OF THE SPIE, SPIE,
BELLINGHAM, VA, US , vol. 5429 12 avril 2004
(2004-04-12), pages 1-10, XP002632878, Extrait de
l'Internet: URL:http://users.ece.gatech.edu/
lanterma/p apers/spie04_mtobias.pdf [extrait le
2011-04-13]

## Description

### 1. Domaine de l'invention

Le domaine de l'invention est celui de la localisation de terminaux dans un réseau de communication, et plus particulièrement de terminaux voulant communiquer entre eux.

Plus précisément, l'invention concerne une telle technique de localisation, notamment dans le domaine des techniques de radio cognitive ou de gestion de spectre, ou dans le domaine des techniques dites « Green Radio », c'est-à-dire des techniques prévoyant une adaptation du faisceau de rayonnement entre deux terminaux afin de réduire la puissance d'émission.

### 2. Art antérieur

On connaît des techniques de localisation basées sur trois classes de techniques différentes :

- les techniques dites « ToA » (pour « Temps d'Arrivée » ou « Time of Arrival » en anglais), ou « DToA » (pour « Différence de Temps d'Arrivée » ou « Differential Time of Arrival » en anglais). Les techniques « ToA » utilisent une mesure des temps de propagation $\delta\tau i$ entre un terminal de référence et le terminal à localiser, encore appelé terminal-obstacle, et la distance correspondante $c\ \delta\tau i$, avec $c$ la vitesse de propagation de l'onde. Ces techniques nécessitent plusieurs terminaux de référence synchronisés entre eux pour localiser le terminal-obstacle. Les techniques « DToA » mesurent des écarts de temps relatifs entre les terminaux, par rapport à un terminal de référence commun aux autres terminaux de référence. Il est en effet nécessaire que la référence de temps soit commune. Ainsi, la position relative des obstacles s'effectue par estimation des temps de propagation relatifs des ondes du terminal-obstacle aux terminaux de référence et nécessite au moins trois terminaux de référence différents, synchronisés entre eux, pour procéder à une localisation à deux dimensions, correspondant à l'intersection du lieu des points associés à chaque temps de propagation ;
- d'autres techniques beaucoup moins précises exploitent l'identification réseau de la cellule dans laquelle se trouve le terminal-obstacle et l'identification du terminal-obstacle dans cette cellule (« CID » pour « Cell Identification » en anglais) pour le localiser. La localisation au sein de la cellule utilise une technique dite « TA » (pour « Timing Advance parameter » en anglais) et présente une estimation très grossière de la position, liée à la taille de la cellule. Une telle technique est par exemple présentée dans le document « 3GPP TS 25.305. (March, 2002). "Stage 2 functional spécification of UE positioning in UTRAN" » ;
- encore d'autres techniques, dites « AoA » (pour « Angle d'arrivée » ou « Angle of Arrival » en anglais) tiennent compte d'une estimation des angles des ondes en réception au niveau de chaque terminal de référence, lorsque le terminal-obstacle émet le signal. Ainsi, la position relative des obstacles est déterminée par l'intersection du lieu des points décrits par les directions d'arrivée des ondes au niveau du terminal obstacle, comme proposé dans le document « N. Delligiannis, S. Louvros, S. Kotsopoulos, "Optimizing Location Positioning using Hybrid ToA-AoA techniques in Mobile Cellular Networks", Mobimedia'07 Conference, May Conference, May 2007». Ces techiques requièrent une antenne intelligente au niveau de chaque terminal de référence. Elles présentent cependant une imprécision de position qui résulte du caractère multi-trajet des ondes qui se propagent et induisent des direction d'arrivée distinctes liées aux différents obstacles (diffuseurs) affectant le signal en réception. Une fonction de coût est proposée pour améliorer cette estimation, tenant compte de la puissance reçue au niveau de chaque terminal de référence et de la dispersion angulaire.

Il existe également des techniques qui hybrident les techniques « AoA » et «ToA » pour améliorer la localisation des terminaux, comme proposé dans le document «N. Delligiannis, S. Louvros, "Hybrid TOA-AOA Location Positioning Techniques in GSM Networks", Wireless personal Communications, May 2009, Springer ». Dans tous les cas, ces techniques nécessitent une synchronisation fine entre plusieurs terminaux de référence (technique « ToA ») ou bien une antenne intelligente (technique « AoA »).

Le document de Nicholas J.Willis-"Bistatic radar" du 1er janvier 2005 ISBN: 1-891121-45-6 divulgue une technique de localisation d'au moins un obstacle entre un émetteur et un récepteur en déterminant un anneau elliptique dans lequel est situé l'obstacle, l'anneau étant défini par deux ellipses confocales.

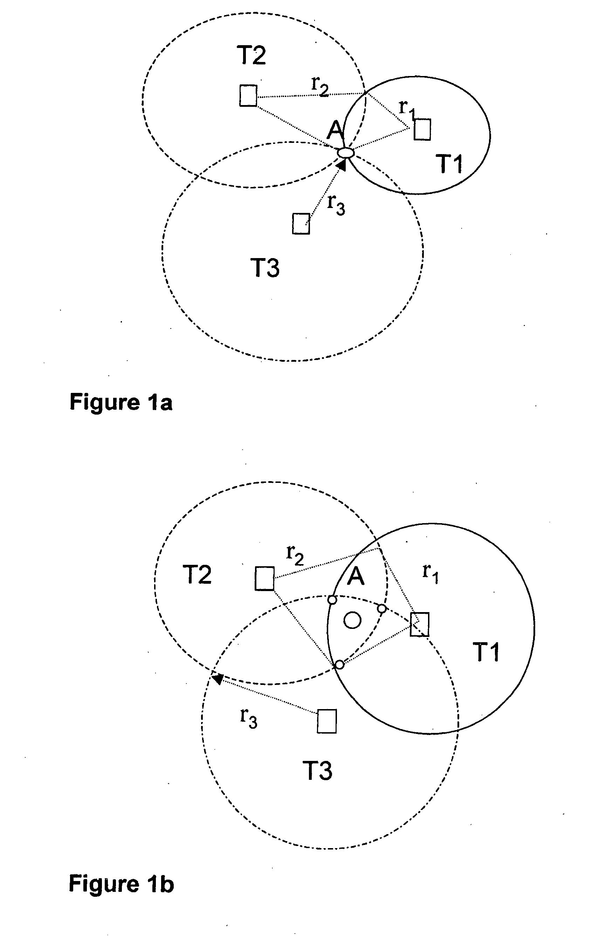

Le principe des techniques « ToA » et « DToA », à deux dimensions, consiste à mesurer l'intervalle de temps $\delta\tau i$ entre le signal émis par le terminal-obstacle et le signal reçu par les terminaux de référence. Cette mesure permet de calculer la distance relative séparant les terminaux suivant une technique différentielle. A chaque intervalle $\delta\tau i$, correspondant au délai de propagation du signal entre un terminal de référence Ti et le terminal-obstacle A, est associé un rayon $ri=c\delta\tau i$ d'un cercle Ci de centre Ti, où Ti est la position du terminal de référence. Suivant une approche simple dans un plan à deux dimensions. le terminal-obstacle A est localisé en considérant l'intersection de trois cercles de

rayon $ri=c\delta\tau i$, comme illustré sur la figure 1a, où c est la vitesse de propagation de l'onde dans l'air. La position exacte du terminal-obstacle, en considérant l'intersection de trois cercles, n'est valable que si le troisième cercle coïncide exactement avec le point d'intersection des deux autres cercles.

Dans le cas le plus général. illustré en figure 1b, où la liaison peut être obstruée, l'intersection des trois cercles conduit à une zone de recouvrement et non à un point. Cette zone est délimitée par trois points correspondant à l'intersection des cercles pris deux à deux et située à l'intérieur du troisième cercle. Le barycentre des trois points d'intersection permet une approximation de la position du terminal, comme présenté dans le document « N. Delligiannis. S. Louvros, S. Kotsopoulos, "Optimizing Location Positioning using Hybrid ToA-AoA techniques in Mobile Cellular Networks", Mobimedia'07 Conference, May 2007 ».

Suivant une approche plus complète résultant du traitement du problème à trois dimensions et de l'exploitation d'une technique « DTOA » tenant compte de la position relative des terminaux de référence (Ti) par rapport à un des terminaux de référence pris en référence (T1), il est démontré que la position du terminal-obstacle A résulte alors de l'intersection de trois hyperboles ou trois ellipses, nécessitant la réception de quatre signaux synchronisés au niveau de quatre terminaux de référence Ti. Cette démonstration est faite par exemple pour la localisation de bateaux à l'aide de balises dans l'article « B. T. Fang, "Simple solutions for hyperbolic and related position fixes", IEEE Transactions on Aerospace and Electronic Systems, 26(5), pp.748-753, 1990 ».

Un inconvénient de ces techniques « ToA » et « DToA » de l'art antérieur réside dans la nécessité d'utiliser au moins trois terminaux de référence synchronisés entre eux de manière précise. De plus, ces techniques présentent une erreur associée à la synchronisation entre les terminaux de référence ainsi qu'à la qualité.de la liaison point-à-point (visibilité ou liaison obstruée induisant un trajet indirect entre le terminal-obstacle et le terminal de référence). Le caractère obstrué de la liaison augmente le temps de propagation sans modifier la distance entre les deux terminaux. Cette modification du temps de propagation tient compte du trajet indirect de l'onde entre les deux terminaux. Cela induit une erreur sur l'estimation de la distance entre les deux terminaux. Des techniques améliorant cette estimation, dites « E-ToA » (pour « Enhanced-ToA » en anglais), ont été proposées, mettant en oeuvre des fonctions de coût. Ces techniques consistent à pondérer l'erreur introduite pour chacune des liaisons point-à point (technique décrite notamment dans le document « G. Turin, W. Jewell, and T. Johnston, "Simulation of Urban Vehicle-Monitoring Systems", IEEE Trans. Vehic. Tech. , vol. VT-21, Feb. 1972, pp. 9-16 ») et à estimer la position par une méthode des moindres carrés. Une amélioration consistant à affiner la position dans un procédé itératif est également proposée dans le document « N. Delligiannis, S. Louvros, S. Kotsopoulos, "Optimizing Location Positioning using Hybrid ToA-AoA techniques in Mobile Cellular Networks", Mobimedia'07 Conference, May 2007 ». En revanche, ces techniques « E-ToA » nécessitent toujours une synchronisation entre plusieurs terminaux de référence.

Il existe donc un besoin pour une nouvelle technique de localisation de terminaux ne nécessitant pas la synchronisation de plusieurs (au moins trois) terminaux de référence, tout en délivrant une localisation fiable et précise, avec une complexité de mise en oeuvre réduite.

## 3. Exposé de l'invention

L'invention propose une solution nouvelle qui ne présente pas l'ensemble de ces inconvénients de l'art antérieur, sous la forme d'un procédé de localisation d'au moins un obstacle entre un émetteur et un récepteur, mettant en oeuvre les étapes suivantes :

- détermination d'au moins un anneau elliptique dans lequel est situé ledit obstacle, ledit anneau elliptique étant défini par deux ellipses confocales, dont les foyers correspondent audit émetteur et audit récepteur, chaque anneau elliptique étant associé à un écho physique généré par un obstacle ;
- estimation d'une distance entre ledit obstacle et un desdits foyers, en fonction d'une détermination de l'écart entre lesdites ellipses confocales, au niveau dudit obstacle, selon un plan normal à l'axe défini par lesdits foyers, de façon à obtenir un ensemble de zones de localisation possibles pour ledit obstacle, dans ledit anneau elliptique ;
- levée de l'ambiguïté entre les différentes zones de localisation possibles dudit obstacle en fonction de ladite distance, délivrant une zone de localisation dudit obstacle.

Ainsi, selon l'invention, on repère un obstacle en trois temps, à partir notamment d'une analyse de l'ellipse, ou plus exactement de l'anneau elliptique, auquel il appartient.

Selon au moins un mode de réalisation particulier, le procédé comprend une étape préalable d'estimation de la réponse impulsionnelle du canal de transmission entre ledit émetteur et ledit récepteur. Ainsi, ladite étape de détermination d'un anneau elliptique et/ou ladite étape d'estimation d'une distance met en oeuvre une analyse d'au moins un pic significatif de ladite réponse impulsionnelle, pour déterminer des informations représentatives de la position de l'obstacle.

Ladite estimation de la réponse impulsionnelle peut par exemple être obtenue à partir d'une analyse d'un signal reçu par ledit récepteur, correspondant à un signal de test émis par ledit émetteur.

Notamment, ladite étape de détermination d'un anneau elliptique peut tenir compte d'au moins trois retards de propagation, correspondant à au moins deux pics significatifs de ladite réponse impulsionnelle :

- un retard $\tau 0$ correspondant au pic principal de ladite réponse impulsionnelle, représentatif du trajet direct entre ledit émetteur et ledit récepteur ;
- deux retards ($\tau 1$, $\tau 2$) correspondant à un pic secondaire, dû à au moins deux trajets réfléchis par ledit obstacle.

Cette étape de détermination d'un anneau elliptique peut ainsi comprendre les sous-étapes de:

- obtention d'une distance $d$ entre ledit émetteur et ledit récepteur, telle que $d = c\tau_0$, avec c la célérité de la lumière ;
- estimation d'une distance $d_1$ entre ledit obstacle et l'un desdits foyers, projetée sur le grand axe desdites ellipses défini par lesdits foyers, en fonction d'un abaque de référence et dudit écart.

Par ailleurs, ladite étape d'estimation d'une distance entre ledit obstacle et un desdits foyers peut tenir compte de la largeur d'au moins un pic significatif associé audit obstacle. Ladite largeur est par exemple mesurée à - 3 dB dudit pic significatif.

Selon au moins un mode de réalisation particulier, ladite étape de levée de l'ambiguïté tient compte d'une estimation d'une fonction retard Doppler pour les retards associés aux pic principal et pic secondaire, associé audit obstacle, de la réponse impulsionnelle.

Cette estimation de la fonction retard Doppler peut ainsi délivrer une estimation de l'angle d'arrivée $\theta v$ d'un signal test sur ledit récepteur, pour ledit retard. Dans ce cas, ladite étape de levée de l'ambiguïté peut comprendre une étape de comparaison de la valeur dudit angle d'arrivée $\theta v$ avec au moins une valeur d'angle prédéterminée pour lesdites zones de localisation possibles.

Selon une application particulière de l'invention, le procédé comprend en outre une étape de gestion d'allocation de ressources dans un réseau de communication auquel appartiennent ledit émetteur et ledit récepteur, en fonction de ladite zone de localisation.

On optimise ainsi cette allocation de ressources, en tenant compte des obstacles détectés. En particulier, la connaissance de la position d'un terminal, vu par l'émetteur et le récepteur comme un obstacle, peut permettre à une station de base, qui joue le rôle d'émetteur ou de récepteur et qui implémente le procédé, de sélectionner un même canal radio si les faisceaux de communication servant respectivement le terminal et l'émetteur ou le récepteur sont spatialement disjoints.

Selon une autre application particulière, notamment lorsque ledit au moins un obstacle $P_i$ correspond à au moins un élément interférent, le procédé comprend en outre une étape d'ajustement du diagramme d'antennes dudit réseau de communication, délivrant un diagramme d'antennes ajusté tel que ledit au moins un élément interférent ne se trouve pas dans une direction d'émission desdites antennes.

Ceci permet d'optimiser l'efficacité des transmissions, et le cas échéant la puissance nécessaire à la transmission.

L'invention concerne également les dispositifs de localisation d'au moins un obstacle entre un émetteur et un récepteur (qui peuvent être intégrés dans cet émetteur et/ou ce récepteur), mettant en oeuvre un procédé tel que décrit ci-dessus.

Un tel dispositif comprend notamment :

- des moyens de détermination d'au moins un anneau elliptique dans lequel est situé ledit obstacle, ledit anneau elliptique étant défini par deux ellipses confocales, dont les foyers correspondent audit émetteur et audit récepteur, chaque anneau elliptique étant associé à un écho physique généré par un obstacle ;
- des moyens d'estimation d'une distance entre ledit obstacle et un desdits foyers, en fonction d'une détermination de l'écart entre lesdites ellipses confocales, au niveau dudit obstacle, selon un plan normal à l'axe défini par lesdits foyers, de façon à obtenir un ensemble de zones de localisation possibles pour ledit obstacle, dans ledit anneau ;
- des moyens de levée de l'ambiguïté entre les différentes zones de localisation possibles dudit obstacle en fonction de ladite distance, délivrant une zone de localisation dudit obstacle.

L'invention concerne également les produits programmes d'ordinateur téléchargeables depuis un réseau de communication et/ou enregistrés sur un support lisible par ordinateur et/ou exécutables par un processeur, comprenant des instructions de code de programme pour l'exécution des étapes du procédé de localisation décrit ci-dessus, lorsqu'un tel programme est exécuté sur un ordinateur.

**4. Liste des figures**

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- les figures 1a et 1b, déjà décrites en relation avec l'art antérieur, présentent des exemples de techniques « ToA » pour la localisation d'un terminal-obstacle A;
- la figure 2 illustre le principe de détermination des zones de Fresnel ;
- la figure 3 illustre des exemples de résolution spatiale élémentaire en fonction des distances $d$ et $d1$, et de la largeur de la bande de transmission $B$ ;
- la figure 4 illustre un exemple de représentation physique d'un canal de propagation avec deux obstacles (A) et (P1) ;
- la figure 5 décrit les principales étapes du procédé de localisation selon un mode de réalisation de l'invention, dans un environnement tel qu'illustré en figure 3 ;
- la figure 6 illustre un exemple de profil de puissance de la réponse impulsionnelle d'un canal de propagation comportant un pic principal et un pic physique ;
- la figure 7 présente un exemple d'abaque de référence de la fonction théorique utilisée pour la localisation d'un obstacle ;
- la figure 8 illustre un exemple d'ambiguïté de localisation d'un obstacle ;
- les figures 9a et 9b présentent respectivement un exemple de fonction retard-Doppler et une illustration de la méthode d'identification de l'angle Doppler des pics significatifs associé à l'obstacle P1 ;
- la figure 10 présente la structure d'un dispositif de localisation mettant en oeuvre une technique de localisation selon un mode de réalisation particulier de l'invention.

**5. Principe général**

5.1 repérage d'un obstacle

L'invention propose donc une approche nouvelle de la localisation d'un ou plusieurs obstacles, situés entre un émetteur et un récepteur. On appelle ici obstacle aussi bien un élément interférent (un immeuble par exemple) qu'un terminal de radiocommunication, autre que l'émetteur et le récepteur. Ces émetteur et récepteur peuvent bien sûr être des terminaux émetteurs et récepteurs.

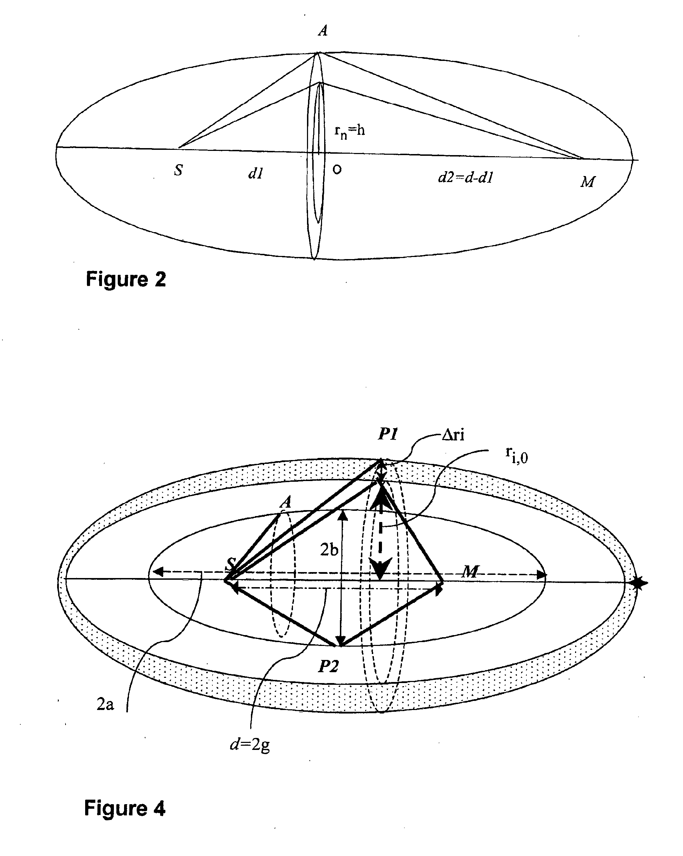

L'approche de l'invention repose sur une estimation de la localisation s'appuyant sur les zones de Fresnel, dont le principe est rappelé en Annexe A et illustré par la figure 2. Sur la base de ce principe, on procède en trois temps, pour un obstacle donné :

- détermination d'un anneau elliptique dans lequel est présent l'obstacle ;
- estimation de la distance entre l'émetteur ou le récepteur et l'obstacle, ce qui permet de définir plusieurs localisations possibles (généralement quatre, du fait des symétries, si on considère une ellipse plane) ;
- recherche de la localisation réelle, ou levée de l'ambiguïté.

L'anneau elliptique est défini par deux ellipses de localisation, c'est-à-dire deux ellipses confocales ayant pour foyers l'émetteur et le récepteur. Cet anneau a une épaisseur variable, en fonction de la position de l'obstacle (épaisseur plus importante à égale distance de l'émetteur et du récepteur, épaisseur plus faible à proximité de l'émetteur ou du récepteur). En déterminant cette épaisseur, on peut donc en déduire une information sur la distance entre l'un des foyers et l'obstacle. Celui-ci est donc alors caractérisé par l'anneau elliptique auquel il appartient et cette distance.

Plusieurs zones correspondant potentiellement à ces caractéristiques, on lève ensuite l'ambiguïté, par exemple en analysant la fonction retard Doppler des pics significatifs associés à l'obstacle.

5.2 obtention des informations de repérage

Ces caractéristiques peuvent notamment être obtenues à partir d'une analyse de la réponse impulsionnelle du canal de propagation entre l'émetteur et le récepteur, obtenue par exemple à partir d'un signal de test, ou signal de référence, émis par l'émetteur et reçu par le récepteur. On peut utiliser ensuite le profil de puissance de la réponse impulsionnelle.

Il apparaît en effet que l'analyse des pics significatifs permet de définir les caractéristiques nécessaires à la localisation :

- le premier pic, ou pic principal, est représentatif du trajet direct entre l'émetteur et le récepteur, et donc de la distance entre les deux foyers ;
- les pics significatifs secondaires correspondent à des trajets réfléchis sur des obstacles, donc à des échos. L'analyse d'un pic secondaire permet de déterminer :

  - la durée des trajets réfléchis, et, en fonction du trajet direct, des ellipses de localisation, ou plus exactement un anneau elliptique, auquel appartient l'obstacle ;
  - la distance entre l'obstacle et l'un des foyers, selon un plan normal à l'axe défini par lesdits foyers, en déterminant l'épaisseur de l'anneau elliptique au niveau de l'obstacle, à partir de la largeur du pic considéré (par exemple à -3 dB).

Dans le cas où plusieurs obstacles seraient présents, la même approche est appliquée à chaque pic secondaire correspondant.

5.3 exemple de détermination d'une localisation

On présente ci-après une interprétation plus théorique d'un mode de réalisation de l'invention.

L'approche de l'invention propose ainsi une localisation d'un obstacle, basée sur la définition d'une variation de chemin $\Delta d$ entre deux échos appartenant à un même écho physique du profil de puissance du canal de propagation considérée correspondre à une incertitude spatiale de position $\Delta r$ de l'obstacle dans le plan normal à l'axe émetteur-récepteur contenant cet obstacle.

La transmission d'un signal de test entre l'émetteur et le récepteur permet typiquement d'obtenir le profil de puissance du canal de propagation. Chaque valeur du profil associée à un retard $\tau_i$ est dite écho ou écho $\tau_i$.

Chaque écho $\tau_i$ de la réponse impulsionnelle du canal de propagation correspond au trajet direct entre l'émetteur et le récepteur ou bien à un trajet indirect généré par un obstacle sur lequel l'onde émise depuis l'émetteur s'est réfléchie avant réception par le récepteur. L'ensemble des positions possibles de cet obstacle, dans un plan, correspond aux lieux des points d'une ellipse de foyers l'émetteur et le récepteur, de longueur du grand axe la distance parcourue par l'onde émise depuis l'émetteur et reçue par le récepteur après réflexion sur l'obstacle.

Ce profil de puissance présente, à un retard $\tau_0$, un maximum, le pic principal, et à des retards $\tau_i$ (supérieurs à $\tau_0$) des maximums locaux (les pics secondaires). Le pic principal correspond au trajet direct. Les maximums locaux correspondent à des trajets réfléchis par des obstacles.

Un écho physique, associé à un pic physique, correspond à l'ensemble des échos contenus dans une fenêtre temporelle [$\tau_i$-$\delta\tau_L$ , $\tau_i$+ $\delta\tau_L$ ], avec $\tau_i$-$\delta\tau_L$ et $\tau_i$+ $\delta\tau_L$ les retards associés à l'amplitude diminuée de n dB, typiquement 3 dB, par rapport à l'amplitude à $\tau_i$. A deux retards $\tau_i$-$\delta\tau_L$ et $\tau_i$+ $\delta\tau_L$ sont associés deux ellipses définissant un anneau elliptique. L'écho physique correspond aux trajets réfléchis plus particulièrement par un obstacle. Ainsi, chaque obstacle est situé dans un anneau elliptique défini par deux ellipses de localisation.

De manière tout à fait équivalente, l'anneau elliptique peut être considéré comme défini par deux ellipses associées aux retards $\tau_i$ et $\tau_i$- $\delta\tau_L$ ou bien aux retards $\tau_i$ et $\tau_i$+ $\delta\tau_L$ . Dans ces cas, $\delta\tau_L$ correspond à une largeur moitié par rapport à la largeur du pic physique délimité par les retards $\tau_i$-$\delta\tau_L$ et $\tau_i$+ $\delta\tau_L$ .

Dans la suite du document, les échos considérés sont $\tau_i$ et $\tau_i$+$\delta\tau_L$ et la largeur associée considérée du pic physique est $\delta\tau_L$ .

La distance entre les deux ellipses associées aux échos considérés, de mêmes foyers, associées à la réflexion d'une onde sur un même obstacle, détermine une incertitude spatiale de position $\Delta r$ de cet obstacle dans un plan normal à l'axe émetteur-récepteur qui a la particularité de varier en fonction de la distance $d_1$ de ce plan à l'émetteur.

La détermination de la variation de chemin $\Delta d$ correspondant aux échos considérés, $\tau_i$ et $\tau_i$+$\delta\tau_L$ peut permettre d'obtenir une valeur expérimentale $\Delta'r$ de l'incertitude spatiale de position, obtenue par la mesure de la largeur $\delta\tau_L$ du pic physique multipliée par la vitesse c de l'onde, et donc de déterminer la distance $d_1$ entre l'émetteur et le plan normal à l'axe émetteur-récepteur compte tenu de la particularité relevée précédemment.

La détermination de la distance $d_1$ peut reposer sur une expression théorique de l'incertitude spatiale de position $\Delta r$ de l'obstacle en deux sous-expressions dont la première est fonction de la distance émetteur-récepteur d et des retards relatifs entre le trajet direct $\tau_0$ et respectivement les trajets réfléchis $\tau_i$ et $\tau_i$+$\delta\tau_L$ fournissant les paramètres des ellipses et dont la seconde dépend de la variable normalisée $d_1/d$. La seconde sous-expression correspond à une fonction dite théorique normalisée dont les valeurs sont portées dans un abaque.

Une mesure des retards $\tau_0$, $\tau_i$ et $\tau_i$+ $\delta\tau_L$ , qui donnent la largeur temporelle $\delta\tau_L$ =$\Delta'r/c$ du pic physique considéré, peut permettre alors la détermination de la distance $d_1$ du plan normal à l'axe émetteur récepteur contenant l'obstacle en comparant le rapport $\Delta'r$/première sous-expression avec les valeurs de l'abaque.

Une ambiguïté de position de l'obstacle subsiste, liée à la symétrie de la fonction théorique normalisée. Celle-ci peut notamment être levée en estimant l'angle d'arrivée en réception des ondes réfléchies sur l'obstacle à l'aide d'une estimation de la fonction retard Doppler associée au pic physique. Cet angle est comparé aux valeurs possibles déduites de l'estimation de d1 et du rayon du cercle délimitant l'ellipse associée à $\tau$i dans le plan normal à l'axe émetteur-récepteur contenant l'obstacle.

## 6. exemple de mise en oeuvre

<u>6.1 aspects mathématiques</u>

Selon le mode de réalisation illustré ci-après, un procédé de localisation selon l'invention consiste donc à détecter le pic principal et au moins un pic significatif, appelés pics physiques, sur le profil de puissance de la réponse impulsionnelle estimée du canal de propagation, et à en extraire des paramètres pertinents.

Ces paramètres pertinents sont les retards associés aux pics principal et significatifs concernés et la largeur considérée du pic physique $\Delta$'ri/c. Ils permettent notamment ensuite de déduire une fonction normalisée tenant compte d'un rapport *d1ld,* où *d* est la distance entre l'émetteur et le récepteur associé au pic principal, et *d1* la distance entre l'émetteur et l'obstacle à localiser (correspondant au pic significatif).

Cette fonction normalisée gexp($\tau$0,$\tau$1,$\tau$2) est ensuite comparée à une fonction théorique g(d1/d), représentée par un abaque, afin d'obtenir la distance *d1* et donc la localisation de l'obstacle.

L'invention est basée sur le fait que le pic principal sur le profil de puissance de la réponse impulsionnelle correspond au trajet direct entre l'émetteur et le récepteur et qu'un pic significatif représente un écho physique traduisant la présence d'un obstacle sur le trajet des ondes entre l'émetteur et le récepteur.

De plus, ce pic significatif est caractérisé par une amplitude relative par rapport au pic principal, et une largeur temporelle $\delta\tau$i à -3dB par rapport à l'amplitude maximale du pic significatif concerné de retard de propagation $\tau_i$ par rapport à un instant de référence, correspondant à l'instant d'émission du signal de test.

Un pic du profil de puissance est qualifié de pic secondaire significatif si son amplitude relative par rapport à l'amplitude du pic principal répond à des critères prédéterminés, comme des seuils dépendants par exemple de l'environnement dans lequel se trouvent les terminaux (émetteur, récepteur et obstacles). Ces seuils prédéterminés se situent typiquement à -20 dB de l'amplitude du pic principal du profil de puissance du canal de propagation. Donc, selon cet exemple numérique, un pic secondaire est retenu comme pic significatif si son amplitude relative n'est pas inférieure de plus de 20 dB par rapport à celle du pic principal.

Comme indiqué ci-dessus, le principe de l'invention repose également sur le fait que l'émetteur et le récepteur (séparés d'une distance *d)* sont positionnés aux foyers des différentes ellipses, dont les paramètres dépendent des pics physiques observés sur le profil de puissance de la réponse impulsionnelle du canal de propagation.

Ainsi, à chaque pic secondaire significatif, résultat de l'effet d'un obstacle sur les ondes émises, est associé un anneau elliptique défini par deux ellipses de localisation, caractérisé par un retard de propagation $\tau_i$ et une largeur temporelle considérée $\delta\tau_i$ de l'écho physique correspondant (soit deux retards, par exemple $\tau_i$ et $\tau_i + \delta\tau_i$ ).

Le retard $\tau$i et la largeur temporelle $\delta\tau$i, associés à un écho physique d'amplitude Ai, permettent une première localisation de l'obstacle, assortie d'une ambiguïté de position liée à une symétrie de la position relative de l'obstacle par rapport à l'émetteur et au récepteur et à la symétrie correspondante de la fonction théorique g(dl/d).

Un signal de test approprié permettant une estimation de la réponse impulsionnelle du canal et un traitement de la réponse impulsionnelle du canal variable dans le temps permettent de lever cette ambiguïté.

Une extension de l'usage du calcul des zones de Fresnel (décrit plus en détails en annexe A faisant partie intégrante de la description et utilisé en théorie de la propagation ondulatoire) et l'exploitation d'une connaissance du canal de propagation multi-trajet pour localiser les obstacles dans l'espace, permettent de montrer que la résolution physique d'un écho de la réponse impulsionnelle du canal de propagation (assimilée à la résolution spatiale) dépend :

- d'une part de la largeur de la bande de transmission *B* du système ou de la bande d'analyse considérée *B,*
- d'autre part de la position du plan normal à l'axe émetteur-récepteur contenant l'obstacle, c'est-à-dire de la distance *d1* entre le plan normal et l'émetteur (la distance entre le plan normal et le récepteur est notée d2 (=*d-d1*)).

On définit, selon l'invention, les résolutions élémentaires, ou « marges », associées à toutes les variables utilisées, comme les distances entre les trajets, les durées des trajets ou les rayons des ellipses. Ces résolutions élémentaires permettent de déterminer les valeurs seuils des variables conduisant à une détermination de la distance *d1* pour des variations infinitésimales associées aux limites du système de transmission.

On considère, dans un premier temps, une variation de chemin élémentaire $\delta d$, correspondant à la plus petite distance détectable pour le système considéré entre un écho direct et un écho réfléchi.

Cette variation de chemin élémentaire $\delta d$ correspond à deux trajets séparés par une durée égale à $\delta\tau$, et est donc égale à c $\delta\tau$, avec c la vitesse de la lumière. $\delta\tau$ est définie comme étant la résolution mathématique élémentaire des échos de la réponse impulsionnelle du canal et est égale à 1/*B*.

On a donc $\delta d = c/B$.

Cette variation de chemin élémentaire $\delta d$ induit une variation de rayon élémentaire $\delta r$ dans le plan normal à l'axe émetteur-récepteur situé à une distance $d1$ de l'émetteur. $\delta r$ correspond à une résolution spatiale élémentaire de position de l'obstacle.

Ainsi, deux échos sont considérés comme indissociables si une variation de chemin entre ces deux échos est inférieure à $\delta d$ (ou si une variation de durée entre ces deux échos est inférieure à $\delta\tau$, ou encore si une variation de rayon associée à ces deux échos est inférieure à $\delta r$).

Ainsi, en vertu de l'équation 2 présentée en Annexe A, on peut écrire la résolution spatiale élémentaire de la façon suivante :

$$\delta r = \sqrt{2\delta d \frac{d_1 d_2}{d_1 + d_2}} = \sqrt{2\delta d}\sqrt{\frac{d_1 d_2}{d_1 + d_2}} = \sqrt{\frac{2c}{B}}\sqrt{\frac{d_1(d - d_1)}{d_1 + (d - d_1)}} = \sqrt{\frac{2cd}{B}}\sqrt{\frac{d_1}{d}\left(1 - \frac{d_1}{d}\right)} \qquad (3)$$

On considère que $\delta r \ll d1$ et $\delta r \ll (d\text{-}d1)$ (condition énoncée en Annexe A), ce qui implique que $\dfrac{2c}{Bd} \ll 1$ et donc que $\dfrac{2c\delta\tau}{d} \ll 1$.

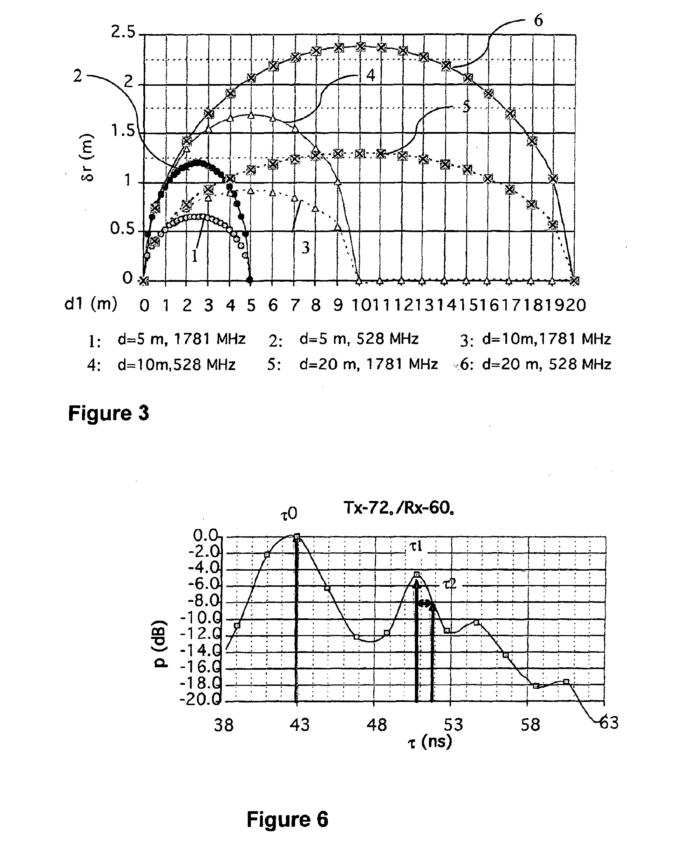

La figure 3 présente des exemples de courbes de valeurs de la résolution spatiale élémentaire $\delta r$, pour différentes distances $d1$ et $d$ associées à deux systèmes de référence de type ULB (pour « Ultra Large Bande »), l'un correspondant au système ECMA-368, dont la largeur de bande $B$ est égale à 528 MHz, l'autre au système IEEE802.15.3c, dont la largeur de bande $B$ est égale à 1781 MHz.

6.2 Description d'un mode de réalisation

On présente maintenant, en relation avec les figures 4 à 9, un mode de réalisation du procédé de localisation d'un obstacle selon l'invention.

Comme illustré sur la figure 4, l'émetteur $S$ et le récepteur $M$ sont situés aux foyers d'une ellipse et séparés par une distance $d$.

Un obstacle A est situé sur une première ellipse de mêmes foyers, caractérisée par une distance $2\alpha = d(S,A) + d(A,M)$ constante, quelle que soit la position de $A$ sur l'ellipse de paramètres {a,b,g}, avec $2g = d$, $a$ le demi grand axe de l'ellipse et $b$ le demi petit axe.

On peut associer plusieurs obstacles localisés en différents points de l'ellipse correspondant à un même retard de propagation $\tau$. Chaque écho $\tau$ de la réponse impulsionnelle du canal de propagation correspond donc à la contribution de plusieurs ondes ayant des directions différentes ou bien situées dans un angle solide $d\Omega$ correspondant à un obstacle, présentant un retard $\tau$ donné et une distance relative supplémentaire $\Delta d$ par rapport au trajet direct.

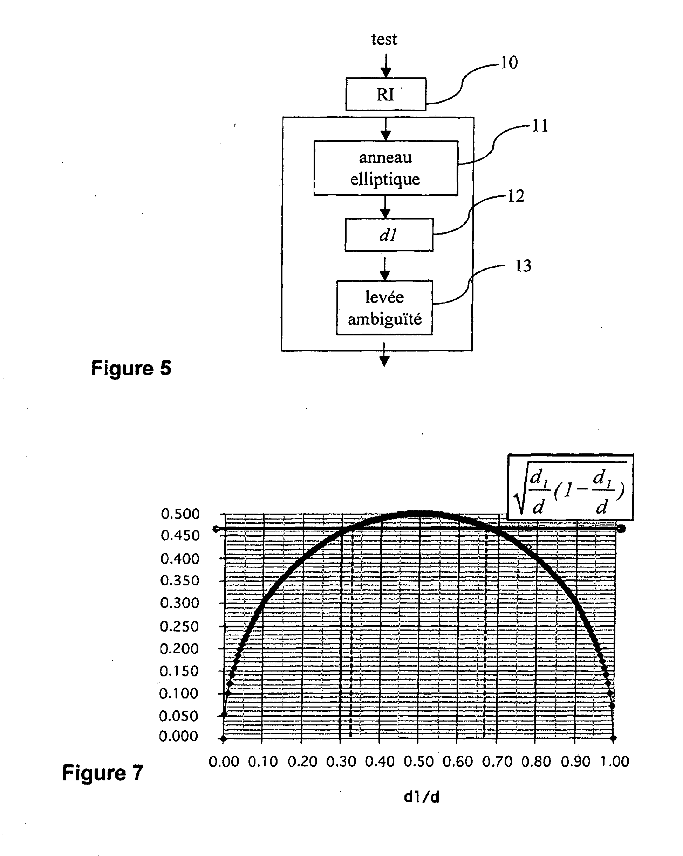

La figure 5 illustre les différentes étapes mises en oeuvre selon ce mode de réalisation du procédé de l'invention.

Ainsi, une première étape 10 d'estimation de la réponse impulsionnelle du canal de transmission entre l'émetteur $S$ et le récepteur $M$ est mise en oeuvre, par émission d'un signal par l'émetteur. Le signal est véhiculé selon un trajet direct, entre l'émetteur et le récepteur, et selon au moins deux trajets réfléchis sur au moins un obstacle $P_i$, que l'on cherche à localiser.

L'estimation de la réponse impulsionnelle du canal peut être effectuée par différentes techniques connues, non détaillées ici, comme par exemple l'insertion de pilotes dans le signal à transmettre ou bien l'émission d'un signal de test.

Comme illustré en figure 6, selon ce mode de réalisation, le profil de puissance de la réponse impulsionnelle présente au moins un pic représentatif d'un retard $\tau_0$, associé au trajet direct, et au moins un pic représentatif de retards $\tau_1$ et $\tau_2$ et de largeur $\Delta\tau$ associés aux trajets réfléchis sur un obstacle $P_1$.

Sur la figure 6, le canal de propagation est mesuré à 60 GHz avec des antennes dont l'ouverture dans le plan azimutal est de 72° et 60° respectivement à l'émission et à la réception. La largeur de bande du canal de propagation est de 512 MHz, ce qui fournit une résolution mathématique des échos de $\delta\tau = 1.95$ns. La distance $d$ émetteur-récepteur est de 12.89m.

Comme indiqué ci-dessus, on peut associer plusieurs obstacles localisés en différents points de l'ellipse correspondant à un même retard de propagation $\tau$ et on peut donc associer à chaque coefficient $\beta j(t)$ de la réponse impulsionnelle $h(t, \tau)$ correspondant à un retard $\tau_j$ une ellipse de longueur de grand axe $2a_j$ tel que $2a_j = c\tau_j$.

On peut écrire la réponse impulsionnelle $h(t, \tau)$ sous la forme suivante :

$$h(t,\tau) = \sum_{j=0}^{N-1} \beta j(t) \cdot \delta(\tau - \tau_j(t))$$

Les obstacles placés sur une ellipse donnée génèrent un écho et fournissent le coefficient complexe $\beta j(t)$ de la réponse impulsionnelle du canal associé au trajet $\tau_j(t)$.

Comme illustré en figure 4, on distingue autant d'ellipses (ici deux ellipses sont représentées pour l'obstacle P1) pour la localisation que d'échos distincts, si l'écart $\Delta\tau$ entre deux retards $\tau_i$ et $\tau_j$ est supérieur à la résolution mathématique $\delta\tau$. Dans ce cas, la différence $2\Delta\alpha$ entre les deux ellipses, engendrée par cet écart $\Delta\tau$, est supérieure à $c\,\delta\tau$.

Ainsi, si l'on a $\tau_i \neq \tau_j$ (si l'écart $\Delta\tau$ entre deux retards $\tau_i$ et $\tau_j$ est supérieure à la résolution mathématique $\delta\tau$), alors on considère que $2\Delta a >> c\delta\tau = \dfrac{c}{B}$ .

L'estimation de la réponse impulsionnelle permet de déterminer des paramètres théoriques {ai,bi,gi} associés aux ellipses de localisation. A chaque trajet réfléchi est associée une ellipse de paramètres ai,bi,gi correspondant respectivement à la longueur du ½ grand axe de l'ellipse (ai), ½ petit axe (bi) et distance entre les foyers de l'ellipse (2g=d) pour le retard τi. Ces paramètres se déduisent de l'identification du trajet principal et du trajet réfléchi i.

On a vu ci-dessus que la différentiation des échos de la réponse impulsionnelle du canal de propagation, représentée par la présence de deux ellipses, implique une variation de rayon $\Delta r$ dans le plan normal. Une différence $2\Delta a$ entre les deux ellipses correspond donc à une variation de rayon $\Delta r$.

Une deuxième étape 11 d'identification de l'anneau elliptique (ou des deux ellipses de localisation qui le caractérisent) de l'obstacle P*i* est ensuite mise en oeuvre, à partir de la réponse impulsionnelle estimée lors de l'étape 10. Comme indiqué précédemment, plusieurs ellipses peuvent être considérées, selon quels retards sont pris en compte.

Cas où les retards considérés sont τi-δτ/2 et τi+δτ/2. L'identification de deux ellipses d'un même pic physique repose sur une estimation de l'amplitude relative des échos contenus dans le pic tels que leur amplitude respective relative par rapport à l'amplitude maximum est inférieure typiquement à 3 dB. On définit ici une largeur temporelle associée à ce pic physique qui correspond à l'écart entre deux échos d'un même pic physique caractérisé par une variation d'amplitude de typiquement 3 dB par rapport à l'écho d'amplitude maximale dans le pic. Dans ce cas, un facteur deux doit être pris en compte dans les équations.

Cas où les retards considérés sont τi-δτ/2 et τi ou τi+δτ/2 et τi. Une des deux ellipses est déterminée par le retard τi auquel correspond une amplitude maximum du pic physique considéré. L'identification de la seconde ellipse associée au même pic physique repose sur une estimation de l'amplitude relative des échos contenus dans le pic tels que leur amplitude relative par rapport à l'amplitude maximum à τi est inférieure typiquement de 3 dB. On définit ici une largeur temporelle associée à ce pic physique comme l'écart entre deux échos du même pic physique caractérisé par une variation d'amplitude de typiquement 3 dB entre eux.

Les ellipses identifiées ont pour foyers l'émetteur et le récepteur et correspondent selon le mode décrit à des retards de propagation $\tau_i$ et $\tau_{i+1}$ de deux trajets indirects de l'onde pour un même obstacle situé dans le plan normal à l'axe émetteur-récepteur, à une distance d1 de l'émetteur ou du récepteur.

Ainsi, à partir de ces deux ellipses de localisation, de rayons respectifs $r_{i,0}$ et $r_{i+1,0}$, on détermine une variation de rayon $\Delta r_i$, cette variation de rayon correspondant à un écart, dans un plan normal au grand axe, entre les rayons $r_{i,0}$ et $r_{i+1,0}$ (un tel rayon n'étant pas le rayon d'une ellipse mais le rayon du cercle passant par l'obstacle). La variation de rayon $\Delta r_i$ s'écrit donc ainsi : $\Delta r_i = r_{i+1,0} - r_{i,0}$, et se détermine de la façon suivante.

Si l'on considère $\tau_0$ le retard associé au trajet direct et $\tau_i$ le retard associé à un trajet réfléchi par l'obstacle le plus proche, alors on peut écrire $\Delta\tau_i = \tau_i - \tau_0$. Le rayon associé $r_{i,0}$ est donné, en vertu de l'équation (1c) de l'annexe A :

$$r_{i,0}(=h) = \sqrt{2\Delta d\,\frac{d_1 d_2}{d_1 + d_2}} = \sqrt{2c(\tau_i - \tau_0)d}\sqrt{\frac{d_1}{d}\left(1 - \frac{d_1}{d}\right)} \qquad (1d)$$

soit :

$$r_{i,0} = \sqrt{2c(\tau_i - \tau_0)\cdot d}\sqrt{\frac{d_1}{d}\left(1 - \frac{d_1}{d}\right)} \qquad (4)$$

sous réserve que la condition $\dfrac{2c(\tau_i - \tau_0)}{d} << 1$ est vérifiée (donc si $\tau_i \neq \tau_0$).

On peut donc calculer le rayon associé à un trajet réfléchi, en fonction du retard de ce trajet par rapport au trajet direct.

On peut également calculer la variation de rayon $\Delta r_i$, égale à $r_{i+1,0} - r_{i,0}$, entre deux rayons successifs $r_{i+1,0}$ et $r_{i,0}$, c'est-à-dire correspondant à deux échos appartenant à un même pic significatif physique sur le profil de puissance de la réponse impulsionnelle, et correspondant donc à une même distance $d1$ entre l'émetteur et le plan normal contenant l'obstacle $P_i$.

Si l'on considère l'équation (4) ci-dessus, on peut donc écrire :

$$\Delta r_i = r_{i+1,0} - r_{i,0} = \sqrt{2c(\tau_{i+1} - \tau_0) \cdot d}\sqrt{\frac{d_1}{d}\left(1 - \frac{d_1}{d}\right)} - \sqrt{2c(\tau_i - \tau_0) \cdot d}\sqrt{\frac{d_1}{d}\left(1 - \frac{d_1}{d}\right)} . (5)$$

Cette variation de rayon $\Delta r_i$ peut être calculée en résolvant une équation du second degré (6), comme décrit ci-dessous :

$$r^2_{i+1,0} = 2c(\tau_{i+1} - \tau_0) \cdot d \frac{d_1}{d}\left(1 - \frac{d_1}{d}\right), r^2_{i,0} = 2c(\tau_i - \tau_0) \cdot d \frac{d_1}{d}\left(1 - \frac{d_1}{d}\right)$$

$$r_{i+1,0}^2 - r_{i,0}^2 = 2c((\tau_{i+1} - \tau_0) - (\tau_i - \tau_0)) \cdot d \frac{d_1}{d}\left(1 - \frac{d_1}{d}\right) = 2c(\tau_{i+1} - \tau_i) \cdot d \frac{d_1}{d}\left(1 - \frac{d_1}{d}\right)$$

$$\text{d'où } c(\tau_{i+1} - \tau_i) = (r_{i+1,0}^2 - r_{i,0}^2)\frac{d}{2d_1(d - d_1)} = (\Delta r_i^2 + 2r_{i,0}\Delta r_i)\left(\frac{d}{2d_1(d - d_1)}\right) \text{ et}$$

$$\Delta r_i^2 + 2r_{i,0}\Delta r_i = 2cd(\tau_{i+1} - \tau_i)\frac{d_1}{d}\left(1 - \frac{d_1}{d}\right), \text{ ce qui donne}$$

$$\Delta r_i^2 + 2r_{i,0} \cdot \Delta r_i - 2cd(\tau_{i+1} - \tau_i)\frac{d_1}{d}\left(1 - \frac{d_1}{d}\right) = 0 \qquad (6)$$

On peut également écrire :

$$\Delta r_i = r_{i+1,0} - r_{i,0} = r_{i,0}\left(-1 + \frac{\sqrt{2c(\tau_{i+1} - \tau_0) \cdot d}\sqrt{\frac{d_1}{d}\left(1 - \frac{d_1}{d}\right)}}{\sqrt{2c(\tau_i - \tau_0) \cdot d}\sqrt{\frac{d_1}{d}\left(1 - \frac{d_1}{d}\right)}}\right) = r_{i,0}\left(-1 + \frac{\sqrt{\tau_{i+1} - \tau_0}}{\sqrt{\tau_i - \tau_0}}\right) \text{et comme, selon}$$

l'équation (4), on a $r_{i,0} = \sqrt{2c(\tau_i - \tau_0) \cdot d}\sqrt{\frac{d_1}{d}\left(1 - \frac{d_1}{d}\right)}$, alors :

$$\Delta r_i = \sqrt{2c(\tau_i - \tau_0) \cdot d}\sqrt{\frac{d_1}{d}\left(1 - \frac{d_1}{d}\right)}\left(-1 + \frac{\sqrt{\tau_{i+1} - \tau_0}}{\sqrt{\tau_i - \tau_0}}\right) \qquad (7).$$

On a donc une expression théorique de la variation de rayon $\Delta r_i$.

Or, la résolution physique, notée $\Delta' r_i$, peut être mesurée sur le profil de puissance de la réponse impulsionnelle du canal et correspond à la largeur considérée à -3 dB du pic physique significatif correspondant au retard $\tau_i$ (désignée précédemment par largeur temporelle $\delta\tau_i$ du pic significatif) pour l'obstacle $P_i$ multipliée par la vitesse de l'onde ($\Delta r_i' = c \cdot (\tau_{i+1} - \tau_i) = c \cdot \delta\tau_i$).

Cette valeur $\Delta' r_i$ de la résolution physique, assimilée à la résolution spatiale $\Delta r_i$, permet ensuite de déterminer, lors d'une étape 12 de détermination, au moins une distance $d1$ entre l'émetteur et le plan normal au grand axe de l'ellipse. Cette étape de détermination de la distance *d1* détermine dans un premier temps un rapport d1/d, à partir d'une valeur de la fonction notée *g* exp($\tau_0, \tau_i, \tau_{i+1}$) :

$$g\,exp(\tau_0, \tau_i, \tau_{i+1}) = \frac{\Delta' r_i}{\sqrt{2c(\tau_i - \tau_0) \cdot d}(-1 + \frac{\sqrt{\tau_{i+1} - \tau_0}}{\sqrt{\tau_i - \tau_0}})} \qquad (8)$$

que l'on compare à une fonction théorique $g(\frac{d_1}{d})$.

Cette valeur de gexp est obtenue grâce à la connaissance de $\Delta' r_i$ et des retards $\tau 0$, $\tau i$ et $\tau i+1$ associés aux pic principal et physique, déterminés lors de l'étape 11. Cette fonction gexp est ensuite comparée à une fonction théorique déduite du calcul de l'étape 12, représentée par un abaque.

Cette fonction théorique s'écrit ainsi : $g(\frac{d_1}{d}) = \sqrt{\frac{d_1}{d}(1 - \frac{d_1}{d})}$.

Comme on a $g\,exp(\tau_0, \tau_i, \tau_{i+1}) = g(\frac{d_1}{d})$ d'après (7), alors on peut écrire :

$$\sqrt{\frac{d_1}{d}(1 - \frac{d_1}{d})} = \frac{\Delta' r_i}{\sqrt{2c(\tau_i - \tau_0) \cdot d}(-1 + \frac{\sqrt{\tau_{i+1} - \tau_0}}{\sqrt{\tau_i - \tau_0}})} \qquad (9)$$

Comme on l'a vu précédemment, on connaît $\Delta' r_i$ (à partir de la mesure sur le profil de puissance de la réponse impulsionnelle $\Delta r_i' = c \delta \tau_i$), les retards $\tau_0, \tau_i, \tau_{i+1}$ (également mesurés sur le profil de puissance de la réponse impulsionnelle) ainsi que la valeur de la distance *d*, obtenue soit par le profil de puissance de la réponse impulsionnelle (connaissant $\tau_0$), alors $d=c\,\tau_0$), soit par connaissance directe de la distance entre l'émetteur et le récepteur.

On peut donc obtenir une valeur pour $g$ exp($\tau_0, \tau_i, \tau_{i+1}$).

A partir de cette valeur, on peut trouver, grâce à un abaque, illustré en figure 7 et représentant les différentes valeurs de $g(\frac{d_1}{d})$, la valeur du rapport *d1/d* correspondant à l'obstacle $P_i$.

Cette valeur du rapport *d1/d* permet d'obtenir au moins une distance *d1*, mais ne permet cependant pas d'obtenir la localisation exacte de l'obstacle $P_i$.

En effet, comme illustré dans le tableau 1 de l'annexe B, faisant partie intégrante de la présente description, il apparaît une ambiguïté de position vis-à-vis de la position relative de l'obstacle $P_i$ par rapport à l'émetteur et au récepteur, délivrant au plus quatre zones de localisation de l'obstacle $P_i$.

En effet, dans le plan azimutal avec des antennes omnidirectionnelles, cette ambiguïté conduit à quatre positions. Compte tenu de la directivité des antennes usuellement utilisées et des scénarios de déploiement des stations de base, cette configuration peut être occultée.

En revanche, si l'on considère seulement le plan vertical ou bien des antennes dont le diagramme de rayonnement est inférieur ou égal à 180°, cette symétrie génère une ambiguïté sur deux positions possibles. Par exemple, deux valeurs de variable *d1/d* sont déterminées (0,315 et 0,685), donnant deux valeurs pour *d1* (4,06 et 8,82).

Le problème étudié ici revient donc à considérer la situation avec une ambiguïté à deux positions.

L'invention prévoit de lever cette ambiguïté de position, lors d'une étape 13, en considérant une estimation de la fonction retard Doppler associée aux pics significatifs de l'obstacle caractérisé par le retard $\tau_i$ du pic secondaire, obtenue à l'aide des estimées du canal de propagation pour l'égalisation ou bien d'un signal de test dédié pour estimer les réponses impulsionnelles et la fonction retard-Doppler du canal de propagation, puis en déterminant l'angle d'arrivée $\theta v$ de l'onde associée au retard du pic secondaire, au niveau du récepteur. Cet angle est comparé aux valeurs des angles {$\theta_{r_i}$, $\theta'_{r_i}$} déduites de la connaissance des valeurs possibles de *d1* et $r_{i,0}$, données par exemple dans le tableau 1 de l'annexe B.

La valeur {$\theta_{r_i}, \theta'_{r_i}$} la plus proche de $\theta v$ est celle correspondant à l'angle d'arrivée des ondes du pic physique significatif associé au retard $\tau_i$.

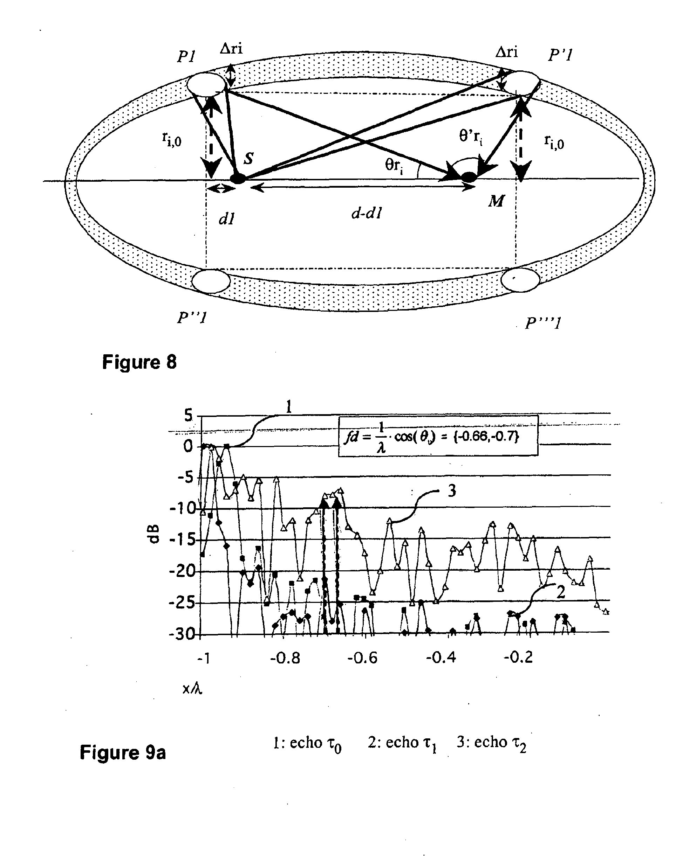

Cette comparaison permet ainsi de lever l'ambiguïté entre les deux valeurs possibles pour *d1*, comme illustré en figure 8.

On considère par exemple un système où la vitesse de variation du canal de propagation est de 1m/s. L'estimation de la fonction retard Doppler est obtenue en identifiant une périodisation du spectre Doppler avec une période égale à $2/\lambda$. La fréquence d'injection du symbole OFDM Doppler est de $\lambda/4$. De plus, on considère un suréchantillonnage spatial de la réponse impulsionnelle du canal de propagation suivant la variable t, afin d'améliorer la résolution des fréquences Doppler tout en limitant la fréquence d'injection du symbole de référence.

Le spectre Doppler considéré est représenté sur la figure 9a, pour les trois échos considérés dans le présent mode de réalisation de l'invention, à savoir $\tau_0, \tau_i (= \tau_1)$ et $\tau_{i+1} (= \tau_2)$. Les composantes Doppler associées aux échos $\tau_1$ et $\tau_2$ sont identifiées sur le graphe de la figure 9a pour la détermination de l'angle Doppler $\theta v$.

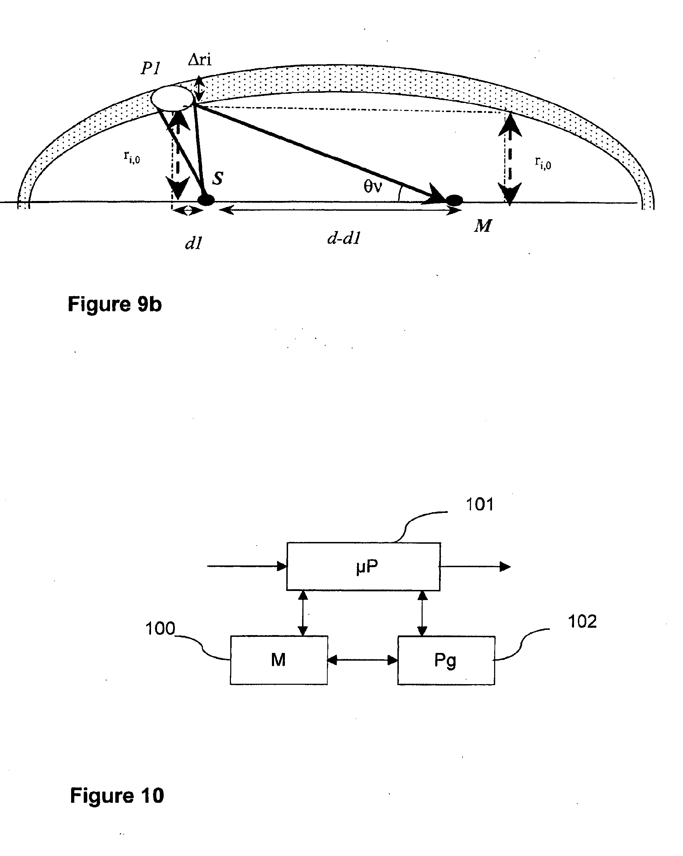

La figure 9b illustre une représentation de l'angle Doppler pour l'obstacle $P_1$.

Le tableau 2 de l'annexe B présente quant à lui les différentes valeurs d'angles, ainsi que la valeur de *d1* pouvant être déduite.

Le signal de test peut reposer préférentiellement sur une injection dans la trame à transmettre, à une fréquence appropriée Fs, d'un signal de référence qui permet de sonder la réponse impulsionnelle du canal de propagation tous les Ts et d'en extraire le spectre Doppler. Dans d'autres cas, il peut s'agir d'une exploitation judicieuse des coefficients du canal de propagation estimés lors d'un traitement dédié pour procéder à l'égalisation du signal de communication en réception

L'invention permet donc d'obtenir la localisation exacte de l'obstacle $P_i$, comme décrit ci-dessus.

## 7. Exemples d'application de l'invention

L'invention permet, grâce à une localisation de terminaux dans un réseau de communication, un ajustement du niveau de puissance rayonnée, c'est-à-dire une formation de faisceaux adaptée à la liaison entre les terminaux, ce qui limite la probabilité d'interférences avec les autres terminaux au voisinage de la liaison.

L'invention permet également une gestion optimisée de la ressource fréquentielle dédiée à une technique de transmission donnée.

En effet, tout dispositif de communication utilise un spectre en fréquence dédié, partagé en sous-canaux fréquentiels, pour réaliser une transmission des données utilisant un schéma de codage et de modulation donnés, dans une bande de transmission dont la largeur correspond à la taille d'un sous-canal fréquentiel. Une information supplémentaire quant à la position des terminaux voulant communiquer entre eux permet donc d'utiliser le même canal radio si les terminaux utilisent des faisceaux de communication spatialement disjoints.

L'invention permet ainsi une amélioration des techniques de radio cognitive reposant sur la gestion du spectre et la sélection des sous-canaux fréquentiels pour réaliser la communication.

Les techniques usuelles de gestion du spectre sont dites « DAA » (pour « techniques de détection et d'évitement » ou « Detect And Avoid » en anglais) ou les techniques dites « DFS » (pour « Sélection Dynamique de Fréquence » ou « Dynamic Frequency Selection » en anglais) qui réalisent un sondage du spectre pour sélectionner un canal fréquentiel, exempt de fréquences parasites, destiné à la transmission. L'invention permet d'améliorer ces différentes techniques.

De même, dans le domaine des techniques dites « green radio », l'invention permet de confiner la puissance rayonnée, en adaptant le faisceau de rayonnement entre deux terminaux après localisation, dans un angle solide intégrant la dispersion des ondes entre l'émetteur et le récepteur, grâce à la connaissance de leurs positions respectives, avec une puissance ajustée assurant la qualité de service requise pour la liaison.

Selon un mode de réalisation, l'invention permet donc de détecter la position des terminaux avec lesquels on souhaite communiquer et à gérer l'allocation de la ressource radio entre terminaux en tenant compte de leurs positions relatives.

De cette manière, une même ressource radio peut être utilisée si les couvertures de liaison sont disjointes. En effet, un des avantages majeurs des liaisons radio à 60 GHz est de pouvoir réutiliser la ressource radio compte tenu de la faible longueur d'onde et de l'usage d'antennes non omnidirectionnelles.

Par exemple, dans le cas des systèmes WPANs à 60 GHz, le standard IEEE802.15.3c supporte trois modes de transmission différents :

- une technique de transmission OFDM dite OFDM-AV (pour « Audio Video »), comportant plusieurs modes de transmission ou « MCS » (pour « Modulation and Coding Scheme » en anglais), pour laquelle les liaisons sont point-à-point et mettent en oeuvre une technique MIMO de type « Beamforming » (pour « formation de faisceaux ») ;
- une technique de transmission OFDM H.S.I (pour « High Speed Interface » en anglais) MCS, pour laquelle les liaisons s'effectuent entre les terminaux à l'aide d'antennes sectorielles ;
- un mode mono-porteuse, SC (pour « Single Carrier » en anglais), associé à des liaisons point-à-point avec des débits qui n'excèdent pas 1,5 Gbit/s.

Dans le cas des modes H.S.I, pour faciliter la communication entre plusieurs terminaux, la localisation mise en oeuvre selon l'invention permet d'améliorer la gestion des canaux alloués à la communication, en allouant le même canal Radio Fréquence (RF) lorsque les liaisons s'opèrent dans des zones différentes dans l'espace.

Ceci est très avantageux dès lors qu'on sait que seulement quatre canaux RF sont définis pour la transmission à 60 GHz de ce standard, et qu'en Europe, le premier canal est interdit. Il ne reste donc que trois canaux pour établir des liaisons entre terminaux pouvant utiliser les trois techniques de transmissions différentes (OFDM-AV, OFDM-H.S.I et SC) associées à ce standard et listées ci-dessus. Il en résulte une forte probabilité d'avoir des problèmes d'interférence multi-utilisateur dès lors que plus de quatre terminaux souhaitent communiquer.

L'invention permet ainsi de localiser les terminaux et d'allouer un même canal RF à deux terminaux lorsqu'ils sont à des positions différentes dans l'espace et des zones de couvertures disjointes. La zone de couverture disjointe pour une même distance $d$ résulte de l'utilisation d'antennes sectorielles pour établir des liaisons. Suivant les modèles d'usage, une certaine gamme de directivité des antennes est recommandée.

Pour ce faire, et comme déjà décrit ci-dessus en relation avec un mode de réalisation de l'invention, les étapes suivantes sont mises en oeuvre selon un mode particulier :

- estimation de la réponse impulsionnelle du canal par le récepteur M à l'aide du signal test émis par l'émetteur $S$ (symbole de référence, ou pilote(s), injecté à une fréquence Fs) ;
- détermination de pics significatifs de la réponse impulsionnelle du canal et de leur écart relatif en distance par rapport à la liaison directe entre l'émetteur et le récepteur ;
- évaluation de la largeur des différents échos physiques de la réponse impulsionnelle, afin de déterminer la position relative de chaque terminal générant un pic secondaire significatif sur la réponse impulsionnelle du canal de propagation ;
- attribution de chaque pic physique aux terminaux environnants à proximité de la liaison émetteur-récepteur ;
- détermination de la position des terminaux parmi les terminaux environnants avec lesquels l'émetteur veut établir une communication ;
- détermination du canal RF pour les terminaux localisés.

## 8. Structure du dispositif de localisation

On présente finalement, en relation avec la figure 10, la structure simplifiée d'un dispositif de localisation mettant en oeuvre une technique de localisation d'au moins un obstacle selon le mode de réalisation particulier décrit ci-dessus.

Par exemple, le dispositif de localisation comprend une mémoire 101 comprenant une mémoire tampon M, une unité de traitement 102, équipée par exemple d'un processeur $\mu$P, et pilotée par un programme d'ordinateur Pg 103, mettant en oeuvre le procédé de localisation selon l'invention.

A l'initialisation, les instructions de code du programme d'ordinateur 103 sont par exemple chargées dans une mémoire RAM avant d'être exécutées par le processeur de l'unité de traitement 102. L'unité de traitement 102 reçoit en entrée au moins un signal test. Le processeur de l'unité de traitement 102 met en oeuvre les étapes du procédé de localisation décrit précédemment, selon les instructions du programme d'ordinateur 103, pour localisation d'au moins un obstacle. Pour cela, le dispositif de localisation comprend, outre la mémoire 101, des moyens de détermination d'au moins un anneau elliptique dans lequel est situé l'obstacle, l'anneau elliptique étant défini par deux ellipses confocales, dont les foyers correspondent à l'émetteur et au récepteur, chaque anneau elliptique étant associé à des échos générés par un obstacle, des moyens d'estimation d'une distance entre l'obstacle et un des foyers, en fonction d'une détermination de l'écart entre les ellipses confocales, au niveau de l'obstacle, selon un plan normal à l'axe défini par les foyers, de façon à obtenir un ensemble de zones de localisation possibles pour l'obstacle, dans ledit anneau et des moyens de levée de l'ambiguïté entre les différentes zones de localisation possibles de l'obstacle en fonction de la distance, délivrant une zone de localisation de l'obstacle. Ces moyens sont pilotés par le processeur de l'unité de traitement 102.

## ANNEXE A

### *Détermination des zones de Fresnel*

Les zones de Fresnel permettent d'identifier les phénomènes physiques mis en jeu par rapport à la longueur d'onde lors d'une transmission radio entre un émetteur $S$ et un récepteur $M$ situés aux foyers d'une ellipse, comme illustré en figure 2 sur laquelle sont représentées des zones de Fresnel. On considère également un obstacle A situé sur cette ellipse.

Si on considère un plan normal à l'axe entre l'émetteur $S$ et le récepteur $M$, situé à une distance $d1$ de l'émetteur, on peut tracer des cercles concentriques de rayon $r_n$ correspondant aux différentes zones de Fresnel.

Les zones de Fresnel sont les rayons dans le plan normal correspondant à un écart de chemin multiple de $\lambda/2$ entre l'onde directe et l'onde passant par le cercle lorsque l'émetteur et le récepteur sont distants d'une distance $d$. Ces ondes sont donc en opposition ou en harmonie de phase et génèrent en réception des champs radioélectriques différents.

A chacun de ces rayons $r_n$ est associée une variation du chemin $\Delta d_n$ par rapport au trajet direct, ce qui induit une variation de phase $\Delta\varphi_n$ entre les deux ondes. On considère que cette variation de phase est égale à $n\pi$ et génère successivement des ondes stationnaires destructives et constructives.

Lorsque la distance $d1$ varie, le lieu des points sur le cercle C de rayon $r_n$ décrit une ellipse pour une distance $d=d1+d2$ donnée, correspondant à la distance émetteur-récepteur.

Sur cette ellipse, plusieurs obstacles peuvent être localisés. Ces obstacles génèrent un même champ radioélectrique associé à la distance relative $\Delta d$ entre les deux ondes directe et réfléchie.

On considère maintenant la différence de chemin $\Delta d$ entre l'onde directe et l'onde se réfléchissant au point A sur un cercle C de rayon $h$, situé à une distance $d1$ de l'émetteur. Cette différence de chemin $\Delta d$ est donnée par l'équation suivante :

$$\Delta d \approx \frac{h^2}{2}\frac{d_1+d_2}{d_1\cdot d_2} \tag{1a}$$

Le rayon h du cercle peut ainsi s'écrire :

$$h=\sqrt{2\Delta d\frac{d_1 d_2}{d_1+d_2}} \tag{1c}$$

On note de plus que :

$$\Delta\varphi=\frac{2\pi}{\lambda}\Delta d \tag{1b}$$

On considère également que $h<<d1$ et $h<<d2$, avec $d2=d-d1$.

Cette dernière condition sur $h$ simplifie l'expression de $h$, en considérant les deux triangles rectangles ayant une hauteur commune représentés sur la figure 2. En effet, la hauteur $h$ se déduit de la méthode qui permet de calculer l'hypoténuse d'un triangle rectangle. Si on considère $h<<d1$ et $h<<d2$, alors on peut utiliser le développement limité $\sqrt{1+x}=1+\frac{1}{2}x$ pour simplifier l'équation (1c).

Si l'on considère maintenant un rayon $r_n$, correspondant au rayon de Fresnel pour la $n^{ième}$ zone de Fresnel et étant associé à une variation du chemin $\Delta d_n$ et à une variation de phase égale à n1t, on peut écrire, selon les équations (1a) et (1b) :

$$\Delta\varphi_n=\frac{2\pi}{\lambda}\Delta d_n=n\pi \text{ et } \Delta d_n=\frac{n\lambda}{2}=\frac{r_n^2 d}{2(d-d_1)d_1}.$$

En considérant l'équation (1c), on peut écrire :

$$r_n=\sqrt{2\Delta d_n\frac{d_1 d_2}{d_1+d_2}}=\sqrt{n\lambda\frac{d_1 d_2}{d_1+d_2}} \tag{2}$$

**ANNEXE B**

Tableau 1

| Paramètres mesurés | | Paramètres calculés | |
|---|---|---|---|
| | | d0 | 12.89 m |
| Retard $\tau 0$ | 42.968 ns | gexp | 0.464 |
| Retard $\tau 1$ | 50.78 ns | d1/d | {0.315,0.685} |
| Retard $\tau 2$ | 52.1 ns | d1 | {4.06, 8.82} m |
| $\Delta$'rj=c $\delta\tau$j | 0.293 m | r1 | 3.6m |

Tableau 2

| Cos $(\theta v)$ | -0.66, -0.70 | 0.85 $\pi$ |
|---|---|---|
| Tg$(\theta_{\tau j})\approx \theta_{\tau j}$ | 0.88 | |
| Tg$(\theta'_{\tau j})\approx \theta'_{\tau j}$ | 0.408 | $\rightarrow$ d1=4.06 m |

## Revendications

1. Procédé de localisation d'au moins un obstacle entre un émetteur et un récepteur, **caractérisé en ce qu'**il comprend les étapes suivantes :

   détermination d'au moins un anneau elliptique dans lequel est situé ledit obstacle, ledit anneau elliptique étant défini par deux ellipses confocales, dont les foyers correspondent audit émetteur et audit récepteur, chaque anneau elliptique étant associé à un écho physique généré par un obstacle, à partir d'au moins trois retards de propagation déterminés en exploitant la réponse impulsionnelle du canal de transmission entre ledit émetteur et ledit récepteur :

   un retard $\tau 0$ correspondant à un maximum d'un pic significatif principal de ladite réponse impulsionnelle, représentatif du trajet direct entre ledit émetteur et ledit récepteur, qui permet de déterminer la distance entre les deux foyers ;
   deux retards $\tau 1$, $\tau 2$ correspondant respectivement à un maximum d'un pic significatif secondaire et à une amplitude relative donnée du maximum, dû à au moins deux trajets réfléchis par ledit obstacle, qui permettent de déterminer une épaisseur de l'anneau elliptique ;

   estimation d'une distance entre ledit obstacle et un desdits foyers, en déterminant l'écart entre lesdites ellipses confocales, au niveau dudit obstacle, selon un plan normal à l'axe défini par lesdits foyers, de façon à obtenir un ensemble de zones de localisation possibles pour ledit obstacle, dans ledit anneau elliptique ;
   estimation d'un angle d'arrivée en réception des trajets réfléchis sur l'obstacle pour lever une ambiguïté entre les différentes zones de localisation possibles dudit obstacle en fonction de ladite distance, délivrant une zone de localisation dudit obstacle.

2. Procédé de localisation selon la revendication 1, comprenant en outre une étape préalable d'estimation de la réponse impulsionnelle du canal de transmission entre ledit émetteur et ledit récepteur en exploitant un signal reçu par ledit récepteur correspondant à un signal de test connu du récepteur et émis par ledit émetteur.

3. Procédé de localisation selon la revendication 1, **caractérisé en ce que** ladite étape de détermination d'un anneau elliptique comprend les sous-étapes de :

   obtention d'une distance $d$ entre ledit émetteur et ledit récepteur, telle que $d = c\tau_0$, avec $c$ la célérité de la lumière ;
   estimation d'une distance $d_1$ entre ledit obstacle et l'un desdits foyers, projetée sur le grand axe desdites ellipses défini par lesdits foyers, en fonction d'un abaque de référence et dudit écart.

4. Procédé de localisation selon la revendication 1, **caractérisé en ce que** ladite étape d'estimation de la distance entre ledit obstacle et un desdits foyers comprend une mesure de la largeur d'au moins un pic significatif associé audit obstacle.

5. Procédé de localisation selon la revendication 4, **caractérisé en ce que** ladite largeur est mesurée à - 3 dB dudit pic significatif.

6. Procédé de localisation selon la revendication 1, **caractérisé en ce que** ladite étape de levée de l'ambiguïté comprend une estimation d'une fonction retard Doppler pour au moins un retard associé à un pic significatif associé audit obstacle.

7. Procédé de localisation selon la revendication 6, **caractérisé en ce que** ladite estimation d'un retard Doppler délivre une estimation de l'angle d'arrivée $\theta v$ d'un signal test sur ledit récepteur, pour ledit retard,
et **en ce que** ladite étape de levée de l'ambiguïté comprend une étape de comparaison de la valeur dudit angle d'arrivée $\theta v$ avec au moins une valeur d'angle prédéterminée pour lesdites zones de localisation possibles.

8. Procédé de localisation selon la revendication 1, **caractérisé en ce qu'**il comprend en outre une étape de gestion d'allocation de ressources dans un réseau de communication auquel appartiennent ledit émetteur et ledit récepteur, en fonction de ladite zone de localisation.

9. Procédé de localisation selon la revendication 1, **caractérisé en ce que** ledit au moins un obstacle $P_i$ correspond à au moins un élément interférent,
et **en ce que** ledit procédé comprend en outre une étape d'ajustement du diagramme d'antennes dudit réseau de communication, délivrant un diagramme d'antennes ajusté tel que ledit au moins un élément interférent ne se trouve pas dans une direction d'émission desdites antennes.

10. Dispositif de localisation d'au moins un obstacle entre un émetteur et un récepteur, **caractérisé en ce qu'**il comprend :

   des moyens pour déterminer au moins un anneau elliptique dans lequel est situé ledit obstacle, ledit anneau elliptique étant défini par deux ellipses confocales, dont les foyers correspondent audit émetteur et audit récepteur, chaque anneau elliptique étant associé à un écho physique généré par un obstacle ;
   des moyens pour estimer une distance entre ledit obstacle et un desdits foyers en déterminant l'écart entre lesdites ellipses confocales, au niveau dudit obstacle, selon un plan normal à l'axe défini par lesdits foyers, de façon à obtenir un ensemble de zones de localisation possibles pour ledit obstacle, dans ledit anneau ;
   des moyens pour estimer un angle d'arrivée en réception des trajets réfléchis sur l'obstacle pour lever l'ambiguïté entre les différentes zones de localisation possibles dudit obstacle en fonction de ladite distance, délivrant une zone de localisation dudit obstacle.

11. Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour l'exécution des étapes du procédé de localisation selon l'une au moins des revendications 1 à 9, lorsque ledit programme est exécuté sur un ordinateur.

**Patentansprüche**

1. Verfahren zur Ortung mindestens eines Hindernisses zwischen einem Sender und einem Empfänger, **dadurch gekennzeichnet, dass** es die folgenden Schritte enthält:

   Bestimmung mindestens eines elliptischen Rings, in dem sich das Hindernis befindet, wobei der elliptische Ring durch zwei konfokale Ellipsen definiert wird, deren Brennpunkte dem Sender und dem Empfänger entsprechen, wobei jeder elliptische Ring einem von einem Hindernis erzeugten physikalischen Echo zugeordnet wird, ausgehend von mindestens drei bestimmten Ausbreitungsverzögerungen, indem die Impulsantwort des Übertragungskanals zwischen dem Sender und dem Empfänger ausgewertet wird:

eine Verzögerung $\tau 0$ entsprechend einem Maximum einer signifikanten Hauptspitze der Impulsantwort, repräsentativ für die direkte Strecke zwischen dem Sender und dem Empfänger, die es ermöglicht, die Entfernung zwischen den zwei Brennpunkten zu bestimmen;

zwei Verzögerungen $\tau 1$, $\tau 2$ entsprechend einem Maximum einer signifikanten Sekundärspitze bzw. einer gegebenen relativen Amplitude des Maximums, aufgrund von mindestens zwei vom Hindernis reflektierten Strecken, die es ermöglichen, eine Dicke des elliptischen Rings zu bestimmen; Schätzen einer Entfernung zwischen dem Hindernis und einem der Brennpunkte, durch Bestimmen des Abstands zwischen den konfokalen Ellipsen, im Bereich des Hindernisses, gemäß einer Ebene normal zur von den Brennpunkten definierten Achse, um eine Gruppe von für das Hindernis möglichen Ortungszonen im elliptischen Ring zu erhalten; Schätzung eines Empfangsankunftswinkels der auf dem Hindernis reflektierten Strecken, um eine Zweideutigkeit zwischen den verschiedenen möglichen Ortungszonen des Hindernisses abhängig von der Entfernung aufzuheben, die eine Ortungszone des Hindernisses liefert.

2. Ortungsverfahren nach Anspruch 1, das außerdem einen vorhergehenden Schritt der Schätzung der Impulsantwort des Übertragungskanals zwischen dem Sender und dem Empfänger enthält, indem ein vom Empfänger empfangenes Signal ausgewertet wird, das einem dem Empfänger bekannten und vom Sender gesendeten Testsignal entspricht.

3. Ortungsverfahren nach Anspruch 1, **dadurch gekennzeichnet, dass** der Schritt der Bestimmung eines elliptischen Rings die folgenden Teilschritte enthält:

Erhalt einer Entfernung d zwischen dem Sender und dem Empfänger, derart, dass gilt $d = c\tau_0$, mit c der Geschwindigkeit des Lichts;

Schätzung einer Entfernung $d_1$ zwischen dem Hindernis und einem der Brennpunkte, projiziert auf die durch die Brennpunkte definierte große Achse der Ellipsen, abhängig von einem Bezugsdiagramm und vom Abstand.

4. Ortungsverfahren nach Anspruch 1, **dadurch gekennzeichnet, dass** der Schritt der Schätzung der Entfernung zwischen dem Hindernis und einem der Brennpunkte eine Messung der Breite mindestens einer dem Hindernis zugeordneten signifikanten Spitze enthält.

5. Ortungsverfahren nach Anspruch 4, **dadurch gekennzeichnet, dass** die Breite auf - 3 dB der signifikanten Spitze gemessen wird.

6. Ortungsverfahren nach Anspruch 1, **dadurch gekennzeichnet, dass** der Schritt des Aufhebens der Zweideutigkeit eine Schätzung einer Doppler-Verzögerungsfunktion für mindestens eine Verzögerung enthält, die einer dem Hindernis zugeordneten signifikanten Spitze zugeordnet ist.

7. Ortungsverfahren nach Anspruch 6, **dadurch gekennzeichnet, dass** die Schätzung einer Doppler-Verzögerung eine Schätzung des Ankunftswinkels $\theta\nu$ eines Testsignals am Empfänger für die Verzögerung liefert, und dass der Schritt des Aufhebens der Zweideutigkeit einen Schritt des Vergleichs des Werts des Ankunftswinkels $\theta\nu$ mit mindestens einem vorbestimmten Winkelwert für die möglichen Ortungszonen enthält.

8. Ortungsverfahren nach Anspruch 1, **dadurch gekennzeichnet, dass** es außerdem einen Schritt der Zuweisungsverwaltung von Ressourcen in einem Kommunikationsnetz, zu dem der Sender und der Empfänger gehören, abhängig von der Ortungszone enthält.

9. Ortungsverfahren nach Anspruch 1, **dadurch gekennzeichnet, dass** das mindestens eine Hindernis $P_i$ mindestens einem interferierenden Element entspricht, und dass das Verfahren außerdem einen Schritt der Einstellung des Antennendiagramms des Kommunikationsnetzes enthält, der ein derart eingestelltes Antennendiagramm liefert, dass das mindestens eine interferierende Element sich nicht in einer Senderichtung der Antennen befindet.

10. Vorrichtung zur Ortung mindestens eines Hindernisses zwischen einem Sender und einem Empfänger, **dadurch gekennzeichnet, dass** sie enthält:

Einrichtungen zur Bestimmung mindestens eines elliptischen Rings, in dem sich das Hindernis befindet, wobei der elliptische Ring durch zwei konfokale Ellipsen definiert wird, deren Brennpunkte dem Sender und dem Empfänger entsprechen, wobei jeder elliptische Ring einem von einem Hindernis erzeugten physikalischen Echo zugeordnet ist;

Einrichtungen zur Schätzung einer Entfernung zwischen dem Hindernis und einem der Brennpunkte durch Bestimmen des Abstands zwischen den konfokalen Ellipsen, im Bereich des Hindernisses, gemäß einer Ebene normal zu der von den Brennpunkten definierten Achse, um eine Gruppe von möglichen Ortungszonen für das Hindernis in dem Ring zu erhalten;

Einrichtungen zum Schätzen eines Empfangsankunftswinkels der auf dem Hindernis reflektierten Strecken, um die Zweideutigkeit zwischen den verschiedenen möglichen Ortungszonen des Hindernisses abhängig von der Entfernung aufzuheben, die eine Ortungszone des Hindernisses liefern.

11. Computerprogrammprodukt, das von einem Kommunikationsnetz herunterladbar und/oder auf einem computerlesbaren Träger gespeichert und/oder von einem Prozessor ausführbar ist, **dadurch gekennzeichnet, dass** es Programmcodeanweisungen für die Ausführung der Schritte des Ortungsverfahrens nach mindestens einem der Ansprüche 1 bis 9 enthält, wenn das Programm in einem Computer ausgeführt wird.

**Claims**

1. Method for locating at least one obstacle between a transmitter and a receiver, **characterized in that** it comprises the following steps:

   determining at least one elliptical ring in which said obstacle is situated, said elliptical ring being defined by two confocal ellipses, the foci of which correspond to said transmitter and to said receiver, each elliptical ring being associated with a physical echo generated by an obstacle, on the basis of at least three propagation delays determined by making use of the impulse response of the transmission channel between said transmitter and said receiver:

   a delay $\tau 0$ corresponding to a maximum of a main significant peak of said impulse response, representing the direct path between said transmitter and said receiver, which makes it possible to determine the distance between the two foci;
   two delays $\tau 1$, $\tau 2$ corresponding to a maximum of a secondary significant peak and to a given relative amplitude of the maximum, due to at least two paths reflected by said obstacle, which make it possible to determine a thickness
   of the elliptical ring;

   estimating a distance between said obstacle and one of said foci, by determining the separation between said confocal ellipses, at said obstacle, in a plane normal to the axis defined by said foci, so as to obtain a set of possible areas of location for said obstacle, in said elliptical ring;
   estimating an angle of arrival at the receiver for the paths reflected from the obstacle in order to resolve an ambiguity between the various possible areas of location of said obstacle as a function of said distance, yielding an area of location of said obstacle.

2. Location method according to Claim 1, furthermore comprising a prior step of estimating the impulse response of the transmission channel between said transmitter and said receiver by making use of a signal received by said receiver corresponding to a test signal known to the receiver and transmitted by said transmitter.

3. Location method according to Claim 1, **characterized in that** said step of determining an elliptical ring comprises the sub-steps of:

   obtaining a distance $d$ between said transmitter and said receiver, such that $d = c\tau_0$, where c is the speed of light;
   estimating a distance $d_1$ between said obstacle and one of said foci, said distance being projected onto the major axis of said ellipses defined by said foci, as a function of a reference chart and of said separation.

4. Location method according to Claim 1, **characterized in that** said step of estimating the distance between said obstacle and one of said foci comprises a measurement of the width of at least one significant peak associated with said obstacle.

5. Location method according to Claim 4, **characterized in that** said width is measured at -3dB of said significant peak.

6. Location method according to Claim 1, **characterized in that** said step of resolving the ambiguity comprises an estimate of a Doppler shift function for at least one delay associated with a significant peak associated with said obstacle.

7. Location method according to Claim 6, **characterized in that** said estimate of a Doppler shift yields an estimate of the angle of arrival $\theta v$ of a test signal at said receiver, for said delay, and **in that** said step of resolving the ambiguity comprises a step of comparing the value of said angle of arrival $\theta v$ with at least one predetermined angle value for said possible areas of location.

8. Location method according to Claim 1, **characterized in that** it furthermore comprises a step of managing resource allocation in a communication network to which said transmitter and said receiver belong, as a function of said area of location.

9. Location method according to Claim 1, **characterized in that** said at least one obstacle $P_i$ corresponds to at least one interfering element, and **in that** said method furthermore comprises a step of adjusting the antenna diagram of said communication network, yielding an adjusted antenna diagram such that said at least one interfering element is not found in a direction of transmission of said antennas.

10. Device for locating at least one obstacle between a transmitter and a receiver, **characterized in that** it comprises:

   means for determining at least one elliptical ring in which said obstacle is situated, said elliptical ring being defined by two confocal ellipses, the foci of which correspond to said transmitter and to said receiver, each elliptical ring being associated with a physical echo generated by an obstacle;
   means for estimating a distance between said obstacle and one of said foci by determining the separation between said confocal ellipses, at said obstacle, in a plane normal to the axis defined by said foci, so as to obtain a set of possible areas of location for said obstacle, in said ring;
   means for estimating an angle of arrival at the receiver for the paths reflected from the obstacle in order to resolve the ambiguity between the various possible areas of location of said obstacle as a function of said distance, yielding an area of location of said obstacle.

11. Computer program product downloadable from a communication network and/or stored on a medium readable by computer and/or executable by a processor, **characterized in that** it comprises program code instructions for the execution of the steps of the location method according to at least one of Claims 1 to 9 when said program is executed on a computer.

**Figure 1a**

**Figure 1b**

**Figure 2**

**Figure 4**

1: d=5 m, 1781 MHz  2: d=5 m, 528 MHz  3: d=10m,1781 MHz
4: d=10m,528 MHz  5: d=20 m, 1781 MHz  6: d=20 m, 528 MHz

**Figure 3**

**Figure 6**

test

RI ———10

anneau
elliptique ———11

$d1$ ———12

levée
ambiguïté ———13

**Figure 5**

$$\sqrt{\frac{d_1}{d}\left(1-\frac{d_1}{d}\right)}$$

**Figure 7**

d1/d

**Figure 8**

$$fd = \frac{1}{\lambda} \cdot \cos(\theta_y) = \{-0.66, -0.7\}$$

**Figure 9a**          1: echo $\tau_0$     2: echo $\tau_1$     3: echo $\tau_2$

**Figure 9b**

**Figure 10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Stage 2 functional spécification of UE positioning in UTRAN. *3GPP TS 25.305.,* Mars 2002
- **N. DELLIGIANNIS ; S. LOUVROS ; S. KOTSOPO-ULOS.** Optimizing Location Positioning using Hybrid ToA-AoA techniques in Mobile Cellular Networks. *Mobimedia'07 Conference,* Mai 2007
- Hybrid TOA-AOA Location Positioning Techniques in GSM Networks. **N. DELLIGIANNIS ; S. LOUV-ROS.** Wireless personal Communications. Springer, Mai 2009
- **NICHOLAS J.WILLIS.** *Bistatic radar,* 01 Janvier 2005, ISBN 1-891121-45-6

- **N. DELLIGIANNIS. ; S. LOUVROS ; S. KOTSOPO-ULOS.** Optimizing Location Positioning using Hybrid ToA-AoA techniques in Mobile Cellular Networks. *Mobimedia'07 Conference,* Mai 2007
- **B. T. FANG.** Simple solutions for hyperbolic and related position fixes. *IEEE Transactions on Aerospace and Electronic Systems,* 1990, vol. 26 (5), 748-753
- **G. TURIN ; W. JEWELL ; T. JOHNSTON.** Simulation of Urban Vehicle-Monitoring Systems. *IEEE Trans. Vehic. Tech.,* Février 1972, vol. VT-21, 9-16